# EUROPÄISCHE PATENTSCHRIFT

(11) **EP 2 606 710 B1**
(45) Veröffentlichungstag und Bekanntmachung des Hinweises auf die Patenterteilung: **08.10.2014**
(21) Anmeldenummer: 11010147.4
(22) Anmeldetag: 22.12.2011
(51) Int. Cl.: A01D 34/76

(54) **Arbeitsgerät**
Work device
Appareil de travail

(43) Veröffentlichungstag der Anmeldung: 26.06.2013
(73) Patentinhaber: Viking GmbH, 6336 Langkampfen (AT)
(72) Erfinder: Gottinger, Clemens, 6320 Angerberg (AT); Duregger, Georg, 6342 Niederdorf (AT); Hanak, Richard, 74401 Frenstat p.R. (CZ)
(74) Vertreter: Reinhardt, Annette

(56) Entgegenhaltungen:
- EP-A1- 0 119 935
- EP-A1- 1 224 853
- US-A- 4 466 233

## Beschreibung

Die Erfindung betrifft ein Arbeitsgerät der im Oberbegriff des Anspruchs 1 angegebenen Gattung.

Aus der DE 102 03 316 A1 ist ein Rasenmäher bekannt, dessen Messer über eine schaltbare Kupplung mit der Antriebswelle des Motors verbindbar ist. Hierzu ist ein Doppelkeilriemen vorgesehen, der mit einem Keil an einer Riemenscheibe der Antriebswelle und mit dem anderen Keil an der Riemenscheibe des Messers läuft. Zum Einkuppeln wird der Riemen, der über eine Spannscheibe geführt ist, gespannt. Dabei werden die beiden Riemenscheiben über den Doppelkeilriemen reibschlüssig miteinander verbunden. Das Messer und die beiden Riemenscheiben sind an der Motorwelle gelagert.

Im Betrieb kann das rotierende Messer gegen Hindernisse wie beispielsweise Steine oder dgl. schlagen. Dabei entstehen Querkräfte, die senkrecht zur Drehachse des Messers stehen und die über die Lagerung des Messers direkt auf die Motorwelle übertragen werden. Dies kann zu Beschädigungen der Motorwelle führen.

Aus der EP 1224 853 A1 ist ein Freischneider bekannt, dessen Antriebsmotor über eine Fliehkraftkupplung mit der Antriebswelle verbunden ist. Die Kupplungstrommel der Fliehkraftkupplung liegt in ausgekuppeltem Zustand an einem Bremselement an. Die Fliehgewichte sind an ihrer mit der Kupplungstrommel in Eingriff kommenden Außenseite abgeschrägt ausgebildet und bewirken beim Einkuppeln eine axiale Verschiebung der Kupplungstrommel, die die Kupplungstrommel von dem Bremsbelag abhebt. Antriebswelle und Abtriebswelle sind in eingekuppeltem Zustand nur über die Fliehgewichte miteinander verbunden.

Der Erfindung liegt die Aufgabe zugrunde, ein Arbeitsgerät der gattungsgemäßen Art zu schaffen, das einen einfachen und stabilen Aufbau besitzt und eine hohe Lebensdauer aufweist.

Diese Aufgabe wird durch ein Arbeitsgerät mit den Merkmalen des Anspruchs 1 gelöst.

Um Beschädigungen der Antriebswelle zu vermeiden, ist vorgesehen, dass das Abtriebselement in eingekuppeltem Zustand nur über das Reibelement direkt mit der Antriebswelle verbunden ist. Das Abtriebselement ist demnach nicht auf der Antriebswelle gelagert. Querkräfte auf das Abtriebselement können durch die Trennung von Antriebselement und Abtriebselement nicht direkt auf die Antriebswelle übertragen werden, sondern nur über das Reibelement, das Querkräfte und andere auftretende Belastungen dämpfen kann. Dadurch sind Beschädigungen an der Antriebswelle vermieden. In ausgekuppeltem Zustand sind das Antriebselement und die Antriebswelle nicht direkt mit dem Abtriebselement verbunden. Es besteht lediglich eine indirekte Verbindung über die Befestigung des Motors, beispielsweise am Gehäuse, und die Lagerung des Abtriebselements, beispielsweise ebenfalls am Gehäuse. Die Kupplung stellt in ausgekuppeltem Zustand keine Verbindung zwischen Antriebselement und Abtriebselement her. Dadurch, dass Antriebselement und Abtriebselement nicht auf einer gemeinsamen Antriebswelle gelagert sind, bleibt die Antriebswelle, die üblicherweise die Motorwelle oder Kurbelwelle des Antriebsmotors ist, bei einem Schlag auf das Werkzeug unbeschädigt. Zur Reparatur müssen nur das Werkzeug und Teile der Kupplung, nicht aber der gesamte Antriebsmotor instand gesetzt oder ausgetauscht werden.

Vorteilhaft ist das Abtriebselement gegenüber einem Gehäuse des Arbeitsgeräts drehbar gelagert. Querkräfte können über die Lagerung des Abtriebselements in das Gehäuse eingeleitet werden und werden dadurch nicht oder nur in geringem Maße auf die Antriebswelle übertragen. Das Antriebselement kann dabei direkt am Gehäuse gelagert sein oder an einem mit dem Gehäuse verbundenen Bauteil gelagert sein. Das Abtriebselement besitzt vorteilhaft eine Nabe zur drehfesten Verbindung mit dem Werkzeug, die im Gehäuse drehbar gelagert ist. Das Antriebselement besitzt vorteilhaft eine Nabe, die drehfest mit der Antriebswelle verbunden ist.

**D**as Antriebselement und das Abtriebselement **besitzen** jeweils eine Kupplungsscheibe, wobei eine der Kupplungsscheiben mindestens ein Reibelement zur Verbindung von Antriebselement und Abtriebselement trägt. Es kann auch vorteilhaft sein, an beiden Kupplungsscheiben jeweils mindestens ein Reibelement anzuordnen.

Vorteilhaft besteht das Reibelement aus einem elastischen Material. Dadurch können Querkräfte, die zwischen Antriebselement und Abtriebselement wirken, von dem Reibelement abgefedert werden. Eine einfache Gestaltung ergibt sich, wenn das Reibelement als Riemen ausgebildet ist. Es können jedoch auch andere Elemente als Reibelement eingesetzt werden. Ein einfacher Aufbau ergibt sich, wenn mindestens eine der Kupplungsscheiben als Riemenscheibe ausgebildet ist und den Riemen trägt, der das Reibelement bildet. Vorteilhaft ist der Riemen ein Einfachkeilriemen, der benachbart zu einer Stirnseite der Riemenscheibe fixiert ist. Die Stirnseite, an der der Einfachkeilriemen fixiert ist, liegt dabei der anderen Kupplungsscheibe zugewandt. Es kann jedoch auch vorgesehen sein, dass der Riemen ein Doppelkeilriemen ist, wobei die Riemenscheibe in eine zwischen den beiden Keilen des Keilriemens gebildete Nut eingreift. Dadurch kann der Riemen auf einfache Weise formschlüssig an der Riemenscheibe fixiert werden, so dass sich ein sicherer Halt des Riemens an der Riemenscheibe ergibt.

Der Riemen ist vorteilhaft als geschlossener Ring ausgebildet und vollständig an der Riemenscheibe angeordnet. Der Riemen ist über 360° um die Drehachse der Riemenscheibe am Umfang der Riemenscheibe geführt und nicht noch um weitere Riemenscheiben oder Spannscheiben geführt. Der Riemen dient ausschließlich als Reibelement zur Übertragung von Reibkräften zwischen Antriebselement und Abtriebselement.

Vorteilhaft wird die Kupplung über eine Verschiebeeinrichtung geschaltet, die eine Relativbewegung von Antriebselement und Abtriebselement in Richtung der Drehachse bewirkt. Die Verschiebeeinrichtung kann in bekannter Weise aufgebaut sein, beispielsweise als Längsführung, und über übliche Betätigungsmittel, beispielsweise über einen Bowdenzug zu betätigen sein. Vorteilhaft verschiebt die Verschiebeeinrichtung das Abtriebselement relativ zu dem Gehäuse. Um sicherzustellen, dass die Kupplung im Ruhezustand ausgekuppelt ist, und um ein unbeabsichtigtes Mitlaufen des Werkzeugs beim Starten des Antriebsmotors zu verhindern, ist vorgesehen, dass die Kupplung in Richtung auf die ausgekuppelte Stellung gefedert ist. Ein schnelles Abbremsen des Abtriebselements und des Werkzeugs beim Auskuppeln kann dadurch erreicht werden, dass das Arbeitsgerät mindestens einen Bremsbelag besitzt, an dem das Abtriebselement in ausgekuppelter Stellung anliegt. Das Arbeitsgerät ist insbesondere ein Rasenmäher und das Werkzeug ein Messer. Die beschriebene Anordnung kann jedoch auch bei anderen Arbeitsgeräten eingesetzt werden, deren Werkzeug über eine Kupplung geschaltet wird.

Ausführungsbeispiele der Erfindung werden im Folgenden anhand der Zeichnung erläutert. Es zeigen:
- Fig. 1: eine schematische, perspektivische Darstellung eines Rasenmähers,
- Fig. 2: einen schematischen Schnitt durch den Rasenmäher aus Fig. 1,
- Fig. 3: einen Schnitt durch die Kupplung in eingekuppeltem Zustand,
- Fig. 4: eine perspektivische Schnittdarstellung der Kupplung aus Fig. 3,
- Fig. 5: einen Schnitt durch die Kupplung in ausgekuppeltem Zustand,
- Fig. 6: eine perspektivische Schnittdarstellung der Kupplung aus Fig. 5,
- Fig. 7: eine perspektivische Ansicht des Abtriebselements der Kupplung aus den Figuren 3 bis 6,
- Fig. 8: einen Schnitt durch ein Ausführungsbeispiel einer Kupplung in eingekuppeltem Zustand,
- Fig. 9: eine perspektivische Schnittdarstellung von Antriebselement und Abtriebselement der Kupplung aus Fig. 8,
- Fig. 10: einen Schnitt durch die Kupplung aus Fig. 8 in ausgekuppeltem Zustand,
- Fig. 11: eine perspektivische Schnittdarstellung von Antriebselement und Abtriebselement der Kupplung aus Fig. 10.

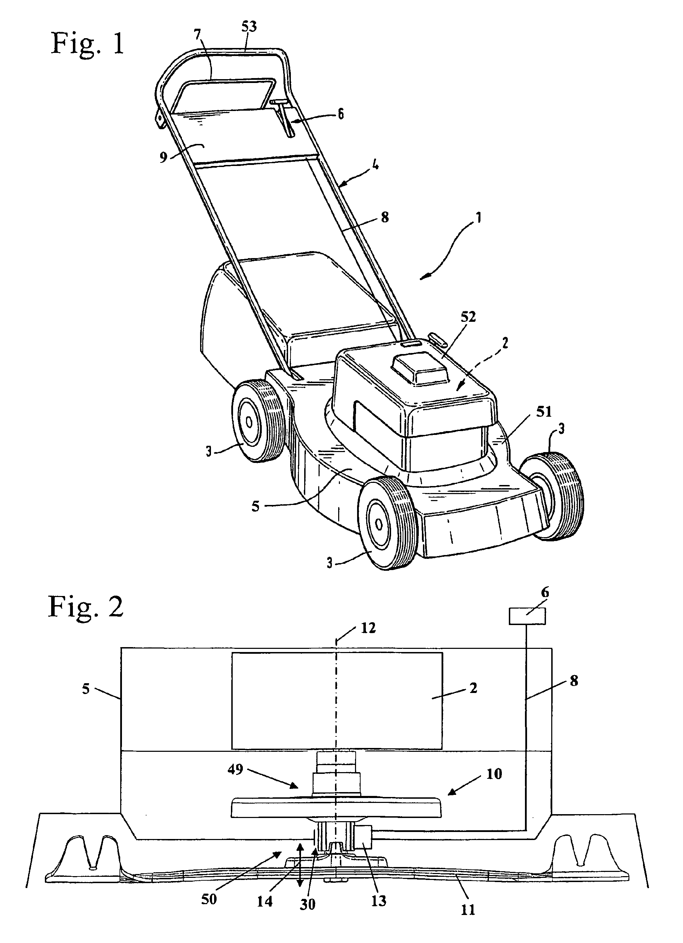

Fig. 1 zeigt als Ausführungsbeispiel für ein handgeführtes Arbeitsgerät einen Rasenmäher 1. Anstatt des Rasenmähers 1 kann auch ein anderes Arbeitsgerät, beispielsweise ein Aufsitzmäher oder dgl., vorgesehen sein. Der Rasenmäher 1 besitzt einen Antriebsmotor 2, der in einem Gehäuse 5 angeordnet ist. Das Gehäuse 5 ist im Ausführungsbeispiel mehrteilig ausgebildet und besitzt eine Haube 51 und eine Motorabdeckung 52. Am Gehäuse 5 sind insgesamt vier Räder 3 gelagert. An dem in Fahrtrichtung hinten liegenden Bereich ist am Gehäuse 5 ein Griffbügel 4 angeordnet. Der Griffbügel 4 besitzt benachbart zu seinem Griffabschnitt 53 einen schwenkbar gelagerten Bedienbügel 7. Am Griffbügel 4 ist eine Griffplatte 9 angeordnet, an der ein Bedienhebel 6 schwenkbar gelagert ist. Der Bedienhebel 6 betätigt über einen Bowdenzug 8 eine im Folgenden noch näher beschriebene Kupplung 10. Zur Betätigung der Kupplung 10 können auch andere Bedienelemente vorgesehen sein. Der Bedienbügel 7 muss betätigt sein, damit der Bedienhebel 6 betätigt werden kann. Dies wird über eine nicht gezeigte Sperreinrichtung, beispielsweise über Sperrklinken, erreicht, die den Bedienhebel 6 freigeben, wenn der Bedienbügel 7 gedrückt ist.

Wie Fig. 2 zeigt, verbindet die Kupplung 10 den Antriebsmotor 2 mit einem Messer 11, das unter der Haube 51 rotierend angeordnet ist. Zum Einkuppeln und Auskuppeln ist eine Verschiebeeinrichtung 13 vorgesehen, auf die der Bedienhebel 6 mit dem Bowdenzug 8 wirkt. Die Kupplung 10 verbindet ein Antriebselement 49, das am Antriebsmotor 2 angeordnet ist, mit einem mit dem Messer 11 verbundenen Abtriebselement 50. Das Abtriebselement 50 wird von der Verschiebeeinrichtung 13 in Richtung des Doppelpfeils 14 gegenüber dem Gehäuse 5 verschoben. Im Ausführungsbeispiel wird das Abtriebselement 50 beim Einkuppeln zum Antriebselement 49 hin gezogen und zum Auskuppeln vom Antriebselement 49 weg geschoben. Das Abtriebselement 50 ist im Gehäuse 5 mit einem Lager 30, das in Fig. 2 nur schematisch gezeigt ist, um eine Drehachse 12 drehbar gelagert. Es kann auch vorgesehen sein, dass das Abtriebselement 50 an einem oder mehreren fest oder über Antivibrationselemente mit dem Gehäuse 5 verbundenen Bauteilen gelagert ist, so dass die in das Abtriebselement 50 eingeleiteten Kräfte indirekt vom Gehäuse 5 aufgenommen werden.

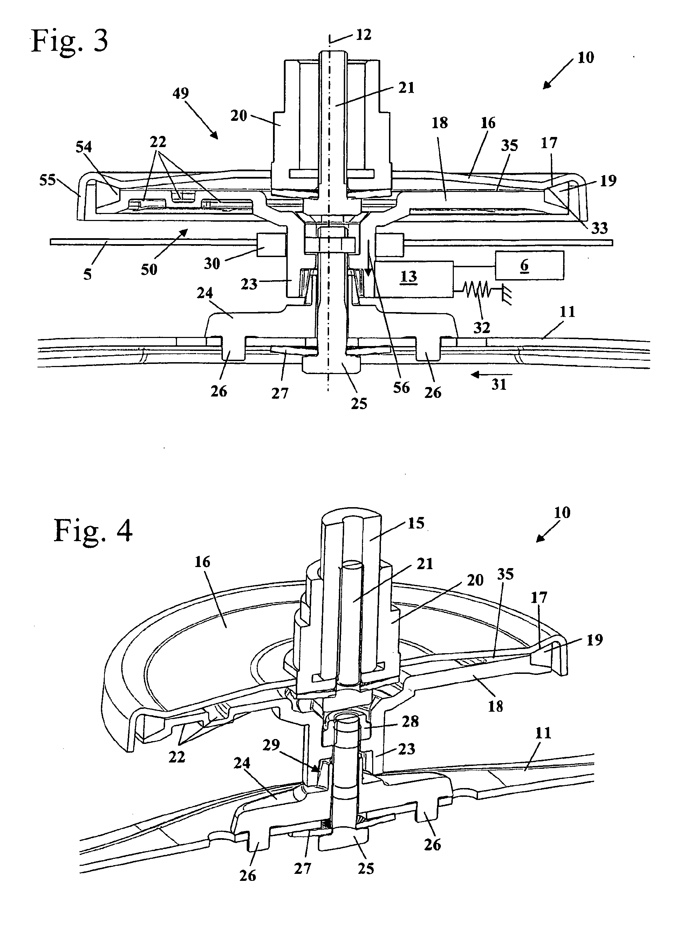

Fig. 3 zeigt den Aufbau der Kupplung 10 im Einzelnen. Das Antriebselement 49 umfasst eine Nabe 20, die mit einer Befestigungsschraube 21 an einer in Fig. 4 gezeigten Antriebswelle 15 des Antriebsmotors 2 fixiert ist. Wie die Figuren 3 und 4 zeigen, ist an der Nabe 20 eine Kupplungsscheibe 16 angeordnet, die eine Anlagefläche 17 an der dem Abtriebselement 50 zugewandten Seite besitzt. Das Abtriebselement 50 umfasst eine Riemenscheibe 18, an deren dem Antriebselement 49 zugewandter Stirnseite 35 benachbart zum Außenumfang ein Keilriemen 19 fixiert ist. Der Keilriemen 19 ist um einen Rand 54 der Riemenscheibe 18 gespannt und hält sich aufgrund seiner Eigenspannung an dem Rand 54. Es kann auch eine andere Befestigung des Keilriemens 19 an der Riemenscheibe 18, beispielsweise über zusätzliche Befestigungselemente, vorteilhaft sein. Der Keilriemen 19 ist über den gesamten Umfang des Rands 54 angeordnet und bildet einen geschlossenen Kreis benachbart zum Umfang der Riemenscheibe 18. Der Keilriemen 19 erstreckt sich über einen Winkel von 360° um die Drehachse 12 an der Riemenscheibe 18. Der Keilriemen 19 besitzt eine Flanke 33, die mit der Anlagefläche 17 der Kupplungsscheibe 16 zusammenwirkt. In dem in Fig. 3 und 4 gezeigten eingekuppelten Zustand liegt die Flanke 33 des Keilriemens 19 an der Anlagefläche 17 an. Dadurch sind das Antriebselement 49 und das Abtriebselement 50 reibschlüssig miteinander verbunden. Die Kupplungsscheibe 16 besitzt einen äußeren Rand 55, der die Riemenscheibe 18 übergreift.

Wie die Figuren 3 und 4 zeigen, ist die Nabe 20 an ihrem dem Abtriebselement 50 zugewandten Ende bis auf die Öffnung für die Befestigungsschraube 21 geschlossen ausgebildet. Die Antriebswelle 15 endet oberhalb der Ebene der zweiten Riemenscheibe 18 und ist mit dieser nicht verbunden.

Wie die Figuren 3 und 4 zeigen, besitzt das Abtriebselement 50 eine Nabe 23, die einteilig mit der Riemenscheibe 18 ausgebildet ist. Die Nabe 23 und die Riemenscheibe 18 können auch als separate Teile ausgebildet und fest miteinander verbunden sein. Die Nabe 23 besitzt eine mittige Vertiefung an der dem Antriebselement 49 zugewandten Seite, in der eine Mutter 28 angeordnet ist. Die Nabe 23 ist an einer Verbindung 29 mit einer Messeraufnahme 24 drehfest verbunden. Die Messeraufnahme 24 besitzt Bolzen 26, die in Aufnahmen des Messers 11 ragen und das Messer 11 drehfest fixieren. An der dem Antriebselement 49 abgewandten Seite liegt eine Scheibe 27 am Messer 11 an, durch die eine Befestigungsschraube 25 ragt. Die Befestigungsschraube 25 erstreckt sich durch die Messeraufnahme 24 und einen Absatz der Nabe 23 in die Mutter 28 und ist dort verschraubt. Dadurch ist das Messer 11 fest mit der Nabe 23 verbunden.

Wie die Figuren 3 und 4 zeigen, wird die direkte Verbindung des Antriebselements 49 mit dem Abtriebselement 50 in eingekuppeltem Zustand der Kupplung 10 ausschließlich über den Keilriemen 19 hergestellt. Eine weitere direkte Verbindung von Antriebselement 49 und Abtriebselement 50 besteht nicht. Antriebselement 49 und Abtriebselement 50 sind lediglich indirekt über die Befestigung des Antriebsmotors 2 am Gehäuse 5 und die Lagerung des Abtriebselements 50 am Gehäuse 5 miteinander verbunden. Die indirekte Verbindung von Antriebselement 49 und Abtriebselement 50 kann über weitere oder andere Bauteile erfolgen. Der Keilriemen 19 besteht aus einem elastischen Material. Dadurch können auf das Messer 11 wirkende Stöße vom Keilriemen 19 gedämpft werden. Wie Fig. 3 zeigt, ist die Nabe 23 über das Lager 30 im Gehäuse 5 gelagert und nicht, wie bei bekannten Gestaltungen, auf der Antriebswelle 15. Über das Gehäuse 5 können dadurch auf das Messer 11 wirkende Kräfte, beispielsweise quer zur Drehachse 12 wirkende Kräfte, abgefangen werden. Diese Kräfte werden höchstens zu einem geringen Teil in die Antriebswelle 15 eingeleitet, so dass eine Beschädigung der Antriebswelle 15, beispielsweise bei einem Schlag auf das Messer 11, vermieden ist. Fig. 3 zeigt schematisch eine Querkraft 31, die senkrecht zur Drehachse 12 wirkt und die vom Lager 30 abgefangen und ins Gehäuse 5 geleitet wird. Auf die Riemenscheibe 18 übertragene Anteile der Querkraft 31 werden vom Keilriemen 19 gedämpft, so dass nur ein kleiner Anteil der Querkraft 31 auf die Antriebswelle 15 übertragen werden kann.

Wie Fig. 3 auch zeigt, wirkt an der Verschiebeeinrichtung 13 eine schematisch gezeigte Feder 32. Die Feder 32 wirkt in Richtung des Pfeils 56 auf die Nabe 23 und spannt die Kupplung 10 in die ausgekuppelte Stellung vor. Die Feder 32 bewirkt außerdem die Rückstellung des Bedienhebels 6 in die unbetätigte Stellung, in der die Kupplung 10 ausgekuppelt ist. In Fig. 3 sind der Bedienhebel 6 und die Feder 32 schematisch gezeigt. Die Feder 32 und der Bedienhebel 6 wirken in entgegengesetzten Richtungen auf die Kupplung 10. Beim Betätigen des Bedienhebels 6 muss die Kraft der Feder 32 überwunden werden, um die Kupplung 10 in die eingekuppelte Stellung zu bewegen.

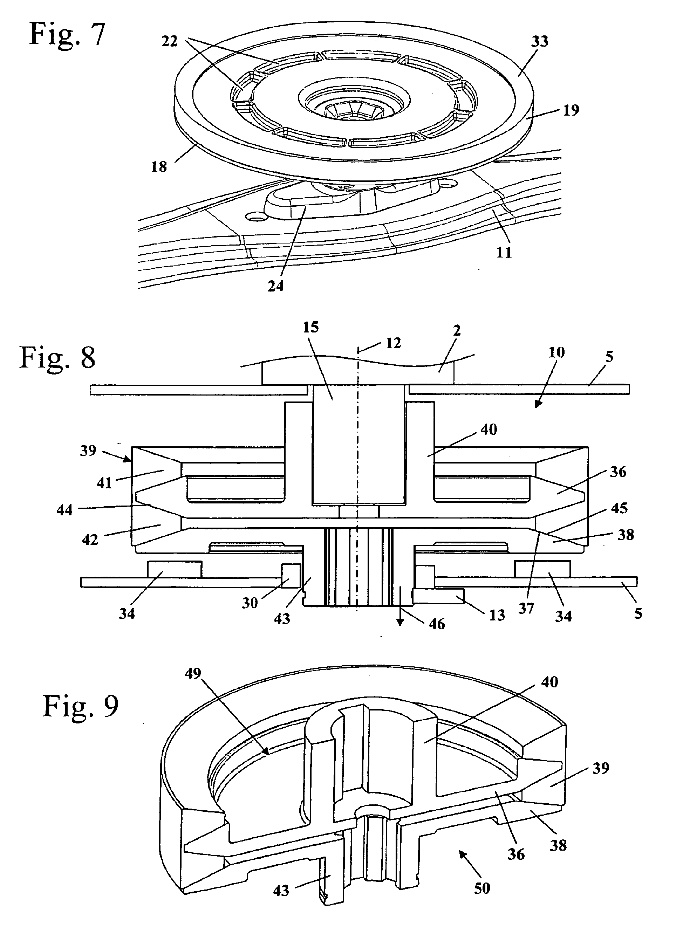

Wie Fig. 3 zeigt, besitzt die zweite Riemenscheibe 18 eine Vielzahl von Vertiefungen 22, die von beiden Seiten in die Riemenscheibe 18 eingebracht sind. Dadurch wird das Gewicht der Riemenscheibe 18 verringert. Die Gestaltung der Vertiefungen 22 ist auch in Fig. 7 gezeigt.

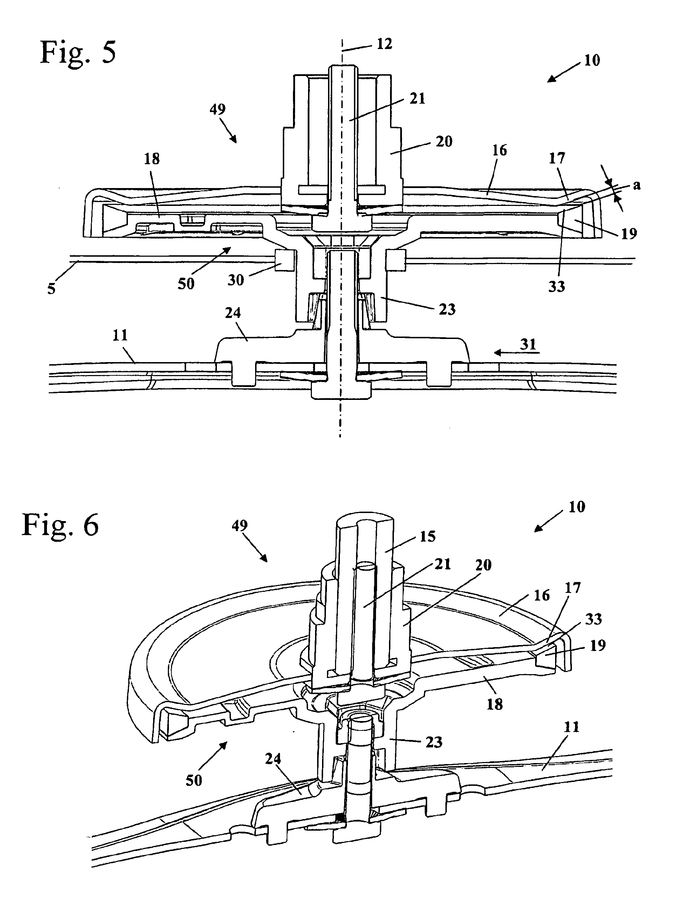

Die Figuren 5 und 6 zeigen die Kupplung 10 in ausgekuppeltem Zustand. In diesem Zustand besitzt die Anlagefläche 17 zur Flanke 33 des Einfachkeilriemens 19 einen Abstand a. In diesem Zustand sind Antriebselement 49 und Abtriebselement 50 vollständig voneinander getrennt. Dadurch können in ausgekuppeltem Zustand der Kupplung 10 keine Querkräfte 31 vom Abtriebselement 50 auf das Antriebselement 49 übertragen werden.

Die Figuren 8 bis 11 zeigen ein weiteres Ausführungsbeispiel einer Kupplung 10. Die Figuren 8 und 9 zeigen die Kupplung 10 in eingekuppeltem Zustand. Die Kupplung 10 besitzt eine Nabe 40, die Teil des Antriebselements 49 ist und die drehfest mit der Antriebswelle 15 verbunden ist. Die Nabe 40 ist einteilig mit einer ersten Riemenscheibe 36 ausgebildet. Die Riemenscheibe 36 läuft an ihrem Außenumfang im Querschnitt keilförmig zu. Am Außenumfang der Riemenscheibe 36 ist ein Doppelkeilriemen 39 angeordnet, der sich über den gesamten Umfang der Riemenscheibe 36 erstreckt. Der Doppelkeilriemen 39 besitzt zwei radial nach innen ragende Keile 41 und 42, zwischen denen eine Nut 44 gebildet ist. In die Nut 44 ragt der Rand der Riemenscheibe 36, dessen Form an die Form der Nut 44 angepasst ist. Der Doppelkeilriemen 39 ist dadurch formschlüssig an der ersten Riemenscheibe 36 gehalten.

Das Abtriebselement 50 umfasst eine Nabe 43, die einteilig mit einer zweiten Riemenscheibe 38 ausgebildet ist. Die Riemenscheibe 38 liegt in dem in den Figuren 8 und 9 gezeigten eingekuppelten Zustand mit einer Anlagefläche 37 an einer Flanke 45 des Doppelkeilriemens 39 an. Die Anlagefläche 37 verläuft entsprechend der Flanke 45 geneigt. Die Nabe 43 ist in dem Lager 30 drehbar und in Richtung der Drehachse 12 verschiebbar gelagert. Am Gehäuse 5 sind benachbart zur zweiten Riemenscheibe 38 Bremsbeläge 34 angeordnet, die in dem in den Figuren 8 und 9 gezeigten eingekuppelten Zustand einen Abstand zur Riemenscheibe 38 besitzen. Es können mehrere, voneinander beabstandet angeordnete Bremsbeläge 34 vorgesehen sein. Es kann jedoch auch ein Bremsbelag 34 vorgesehen sein, der insbesondere ringförmig ist.

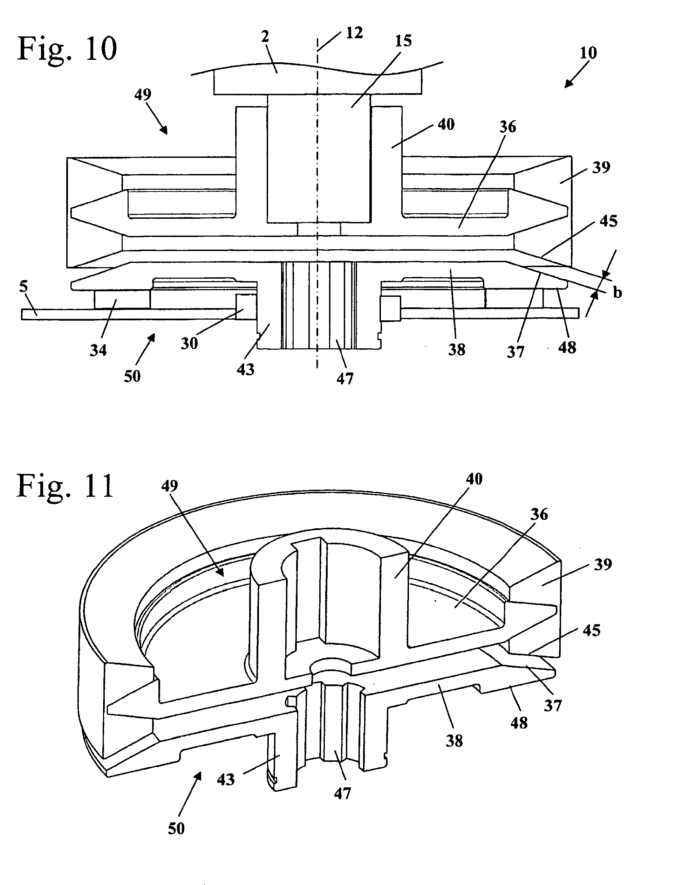

Die Verschiebeeinrichtung 13 verschiebt die Nabe 43 und die Riemenscheibe 38 zum Auskuppeln in Richtung des Pfeils 46 in Fig. 8. Die Figuren 10 und 11 zeigen die Kupplung 10 in ausgekuppeltem Zustand. In diesem Zustand besitzt die Flanke 45 des Doppelkeilriemens 39 zur Anlagefläche 37 der zweiten Riemenscheiben 38 einen Abstand b. Die zweite Riemenscheibe 38 besitzt an ihrer der ersten Riemenscheibe 36 abgewandten Stirnseite eine Bremsfläche 48, mit der sie in dem in den Figuren 10 und 11 gezeigten ausgekuppelten Zustand am Bremsbelag 34 anliegt und dadurch schnell abgebremst wird. Wie die Figuren 10 und 11 zeigen, besitzt die Nabe 43 an ihrer Innenseite eine Keilverzahnung 47 zur formschlüssigen Verbindung mit der in den Figuren 8 bis 11 nicht gezeigten Messeraufnahme 24. Eine mit der Nabe 43 verbundene Messeraufnahme 24 kann entsprechend der Messeraufnahme 24 aus den Figuren 2 bis 6 ausgebildet sein.

Auch bei dem in den Figuren 8 bis 11 gezeigten Ausführungsbeispiel besteht die direkte Verbindung von Antriebselement 49 und Abtriebselement 50 in eingekuppeltem Zustand ausschließlich über den Doppelkeilriemen 39. In dem in den Figuren 10 und 11 gezeigten ausgekuppelten Zustand besteht keine direkte Verbindung zwischen Antriebselement 49 und Abtriebselement 50. Lediglich über die Befestigung des Antriebsmotors 2, beispielsweise am Gehäuse 5, und die Lagerung des Abtriebselements 50, beispielsweise ebenfalls am Gehäuse 5, besteht eine indirekte Verbindung von Antriebselement 49 und Abtriebselement 50. Der Doppelkeilriemen 39 besteht aus einem elastischen Material und besitzt eine große Querschnittsfläche, so dass Stöße auf das Abtriebselement 50 in eingekuppeltem Zustand vom Doppelkeilriemen 39 gedämpft auf die Antriebswelle 15 übertragen werden. Querkräfte und andere Belastungen werden im Wesentlichen vom Lager 30 aufgenommen und direkt ins Gehäuse 5 abgeleitet, so dass die Antriebswelle 15 vor Belastungen, insbesondere quer zur Drehachse 12, geschützt ist.

Anstatt der in den Ausführungsbeispielen gezeigten Keilriemen 19 und 39 können auch andere Reibelemente zur reibschlüssigen Verbindung von Antriebselement 49 und Abtriebselement 50 vorgesehen sein.

## Patentansprüche

1. Arbeitsgerät mit einem Antriebsmotor (2), der über eine Kupplung (10) mit einem Werkzeug des Arbeitsgeräts verbindbar ist und das Werkzeug in eingekuppeltem Zustand um eine Drehachse (12) rotierend antreibt, wobei die Kupplung (10) ein von einer Antriebswelle (15) des Antriebsmotors (2) angetriebenes Antriebselement (49) und ein mit dem Werkzeug verbundenes Abtriebselement (50) umfasst, wobei das Antriebselement (49) und das Abtriebselement (50) beim Betätigen der Kupplung (10) in Richtung der Drehachse (12) relativ zueinander bewegt werden, wobei das Antriebselement (49) und das Abtriebselement (50) in eingekuppeltem Zustand über mindestens ein Reibelement reibschlüssig miteinander verbunden sind,
**und wobei** das Abtriebselement (50) in eingekuppeltem Zustand nur über das mindestens eine Reibelement direkt mit der Antriebswelle (15) verbunden ist,
**dadurch gekennzeichnet, dass das Antriebselement (49) eine erste Kupplungsscheibe (16) und das Abtriebselement (50) eine zweite Kupplungsscheibe besitzt, wobei mindestens eine der Kupplungsscheiben als Riemenscheibe (18, 36, 38) ausgebildet ist und einen Riemen trägt, der das Reibelement bildet.**

2. Arbeitsgerät nach Anspruch 1,
**dadurch gekennzeichnet, dass** das Abtriebselement (50) gegenüber einem Gehäuse (5) des Arbeitsgeräts drehbar gelagert ist.

3. Arbeitsgerät nach Anspruch 2,
**dadurch gekennzeichnet, dass** das Abtriebselement (50) eine Nabe (23, 43) zur drehfesten Verbindung mit dem Werkzeug besitzt, wobei die Nabe (23, 43) gegenüber dem Gehäuse (5) drehbar gelagert ist.

4. Arbeitsgerät nach einem der Ansprüche 1 bis 3,
**dadurch gekennzeichnet, dass** das Antriebselement (49) eine Nabe (20, 40) besitzt, die drehfest mit der Antriebswelle (15) verbunden ist.

5. Arbeitsgerät nach einem der **Ansprüche 1 bis 4,**
**dadurch gekennzeichnet, dass** der Riemen ein Einfachkeilriemen (19) ist und benachbart zu einer Stirnseite (35) der Riemenscheibe (18) fixiert ist.

6. Arbeitsgerät nach **einem der Ansprüche 1 bis 4,**
**dadurch gekennzeichnet, dass** der Riemen ein Doppelkeilriemen (39) ist, wobei die Riemenscheibe (36) in eine zwischen den beiden Keilen (41, 42) des Doppelkeilriemens (39) gebildete Nut (44) eingreift.

7. Arbeitsgerät nach einem der Ansprüche **1** bis **6**,
**dadurch gekennzeichnet, dass** der Riemen als geschlossener Ring ausgebildet und vollständig an der Riemenscheibe (18, 36) angeordnet ist.

8. Arbeitsgerät nach einem der Ansprüche 1 bis **7**,
**dadurch gekennzeichnet, dass** die Kupplung über eine Verschiebeeinrichtung (13) geschaltet wird, die eine Relativbewegung von Antriebselement (49) und Abtriebselement (50) in axialer Richtung der Drehachse (12) bewirkt.

9. Arbeitsgerät nach Anspruch **8**,
**dadurch gekennzeichnet, dass** die Verschiebeeinrichtung (13) das Abtriebselement (50) relativ zu dem Gehäuse (5) bewegt.

10. Arbeitsgerät nach einem der Ansprüche 1 bis **9**,
**dadurch gekennzeichnet, dass** die Kupplung (10) in Richtung auf die ausgekuppelte Stellung gefedert ist.

11. Arbeitsgerät nach einem der Ansprüche 1 bis **10**,
**dadurch gekennzeichnet, dass** das Arbeitsgerät mindestens einen Bremsbelag (34) besitzt, an dem das Abtriebselement (50) in ausgekuppelter Stellung anliegt.

12. Arbeitsgerät nach einem der Ansprüche 1 bis **11**,
**dadurch gekennzeichnet, dass** das Arbeitsgerät ein Rasenmäher (1) und das Werkzeug ein Messer (11) ist.

## Claims

1. Working implement, comprising a drive motor (2) which can be connected via a clutch (10) to a tool of the working implement and in the engaged state drives the tool to rotate about an axis of rotation (12), wherein the clutch (10) comprises a drive element (49) driven by a drive shaft (15) of the drive motor (2) and a driven element (50) connected to the tool, wherein the drive element (49) and the driven element (50) are moved relative to one another if the clutch (10) is operated in the direction of the axis of rotation (12), wherein the drive element (49) and the driven element (50) are connected to one another by frictional force via at least one friction element in the engaged state, and wherein the driven element (50) is directly connected to the drive shaft (15) in the engaged state via the at least one friction element only,
**characterised in that** the drive element (49) has a first clutch disc (16) and the driven element (50) has a second clutch disc, at least one of the clutch discs being designed as a pulley (18, 36, 38) and supporting a belt which represents the friction element.

2. Working implement according to claim 1,
**characterised in that** the driven element (50) is mounted rotatably relative to a housing (5) of the working implement.

3. Working implement according to claim 2,
**characterised in that** the driven element (50) has a hub (23, 43) for a non-rotatable connection to the tool, the hub (23, 43) being mounted rotatably relative to the housing (5).

4. Working implement according to any of claims 1 to 3,
**characterised in that** the drive element (49) has a hub (20, 40) which is non-rotatably connected to the drive shaft (15).

5. Working implement according to any of claims 1 to 4,
**characterised in that** the belt is a single V-belt (19) and fixed adjacent to an end face (3 5) of the pulley (18).

6. Working implement according to any of claims 1 to 4,
**characterised in that** the belt is a double V-belt (39), the pulley (36) engaging with a groove (44) formed between the two vees (41, 42) of the double V-belt (39).

7. Working implement according to any of claims 1 to 6,
**characterised in that** the belt is designed as a closed ring and completely arranged on the pulley (18, 36).

8. Working implement according to any of claims 1 to 7,
**characterised in that** the clutch is operated via a displacement device (13) which causes a relative movement of the drive element (49) and the driven element (50) in the axial direction of the axis of rotation (12).

9. Working implement according to claim 8,
**characterised in that** the displacement device (13) moves the driven element (50) relative to the housing (5).

10. Working implement according to any of claims 1 to 9,
**characterised in that** the clutch (10) is spring-loaded towards the disengaged position.

11. Working implement according to any of claims 1 to 10,
**characterised in that** the working implement has at least one brake lining (34) against which the driven element (50) bears in the disengaged position.

12. Working implement according to any of claims 1 to 11,
**characterised in that** the working implement is a lawnmower (1) and the tool is a blade (11).

## Revendications

1. Appareil de travail avec un moteur d'entraînement (2) qui est apte à être relié à un outil par l'intermédiaire d'un accouplement (10) et qui, à l'état accouplé, entraîne l'outil en rotation sur un axe de rotation (12), étant précisé que l'accouplement (10) comprend un élément d'entraînement (49) entraîné par un arbre d'entraînement (15) du moteur d'entraînement (2), et un élément de sortie (50) relié à l'outil, que l'élément d'entraînement (49) et l'élément de sortie (50), lors de l'actionnement de l'accouplement (10), sont déplacés l'un par rapport à l'autre dans le sens de l'axe de rotation (12), que l'élément d'entraînement (49) et l'élément de sortie (50), à l'état accouplé, sont reliés l'un à l'autre par friction par l'intermédiaire d'au moins un élément de friction, et que l'élément de sortie (50), à l'état accouplé, n'est relié directement à l'arbre d'entraînement (15) que par l'intermédiaire dudit élément de friction,
**caractérisé en ce que** l'élément d'entraînement (49) comporte un premier disque d'accouplement (16), et l'élément de sortie (50) un second disque d'accouplement, étant précisé que l'un au moins des disques d'accouplement est conçu comme un disque à courroie (18, 36, 38) et porte une courroie qui forme l'élément de friction.

2. Appareil de travail selon la revendication 1,
**caractérisé en ce que** l'élément de sortie (50) est monté en rotation par rapport à un carter (5) de l'appareil de travail.

3. Appareil de travail selon la revendication 2,
**caractérisé en ce que** l'élément de sortie (50) comporte un moyeu (23, 43) pour une liaison, solidaire en rotation, avec l'outil, étant précisé que le moyeu (23, 43) est monté en rotation par rapport au carter (5).

4. Appareil de travail selon l'une des revendications 1 à 3,
**caractérisé en ce que** l'élément d'entraînement (49) comporte un moyeu (20, 40) qui est relié, solidaire en rotation, à l'arbre d'entraînement (15).

5. Appareil de travail selon l'une des revendications 1 à 4,
**caractérisé en ce que** la courroie est une courroie trapézoïdale simple (19) et est fixée près d'un côté frontal (35) du disque à courroie (18).

6. Appareil de travail selon l'une des revendications 1 à 4,
**caractérisé en ce que** la courroie est une courroie trapézoïdale double (39), étant précisé que le disque à courroie (36) s'emboîte dans une rainure (44) qui est formée entre les deux coins (41, 42) de la courroie trapézoïdale double (39).

7. Appareil de travail selon l'une des revendications 1 à 6,
**caractérisé en ce que** la courroie est conçue comme un anneau fermé et est disposée entièrement sur le disque à courroie (18, 36).

8. Appareil de travail selon l'une des revendications 1 à 7,
**caractérisé en ce que** l'accouplement est commandé par l'intermédiaire d'un dispositif de manoeuvre (13) qui provoque un déplacement relatif de l'élément d'entraînement (49) et de l'élément de sortie (50) dans le sens axial de l'axe de rotation (12).

9. Appareil de travail selon la revendication 8,
**caractérisé en ce que** le dispositif de manoeuvre (13) déplace l'élément de sortie (50) par rapport au carter (5).

10. Appareil de travail selon l'une des revendications 1 à 9,
**caractérisé en ce que** l'accouplement (10) est contraint par ressort en direction de la position désaccouplée.

11. Appareil de travail selon l'une des revendications 1 à 10,
**caractérisé en ce que** ledit appareil de travail comporte au moins une garniture de frein (34) contre laquelle l'élément de sortie (50) est appliqué en position désaccouplée.

12. Appareil de travail selon l'une des revendications 1 à 11,
**caractérisé en ce que** ledit appareil est constitué par une tondeuse à gazon (1), et l'outil par une lame (11).
